# EUROPEAN PATENT APPLICATION

(11) **EP 2 108 820 A2**
(43) Date of publication of application: **14.10.2009**
(21) Application number: 09380064.7
(22) Date of filing: 30.03.2009
(51) Int. Cl.: F03D 3/00

(54) **Wind turbine**

(30) Priority: 09.04.2008 ES 200801003
(71) Applicant: Proyectos de ingenieria tecnologica, S.A., 20015 San Sebastian Guipuzcoa (ES)
(72) Inventor: Candelas Pérez, Ramon, 20015 San Sebastian (ES); Caporossi Urrestilla, Bernard, 20015 San Sebastian (ES); Peñalba Otady, Miriam, 20015 San Sebastian (ES)
(74) Representative: Gil-Vega, Victor

(57) **Abstract**

Especially designed for use in urban settings, on roofs, flat roofs and similar locations, as an element that looks static and with minimum effect on the appearance of the building, it consists of a static turbine and a vertical shaft based on an interior housing (2) and an exterior housing (5) between which there are deflectors (4) that channel the wind which blows horizontally into the turbine to the top of the same, where the flow of air which is now vertical passes through a rotor (3) the shaft (7) of which transmits the motion to the turbine itself (8), specifically to the electric power generator which transforms the kinetic energy of the (3) into electric power.

## Description

### OBJECT OF THE INVENTION

This invention refers to a wind turbine, i.e., a generator that produces electric current from the wind energy supplied by moving air.

The objective of this invention is to attain a generator with reduced dimensions and high performance, which using a turbine acts as a turbogenerator with a vertical shaft, and which may be used in urban settings, such as on roofs and/or the terrace roofs of buildings.

The invention is therefore in the field of renewable energy generator devices, and more specifically in the field of wind-powered electricity generators.

### BACKGROUND OF THE INVENTION

As is known, for basically environmental reasons there is a strong tendency to use renewable energies, such as solar energy and wind energy.

While solar panels may be installed without distinction in cities or in rural areas, wind turbines, even smaller ones, are designed for use in rural environments. Their rotors usually have a horizontal shaft and are over two meters in diameter, and they are installed on towers of a certain height which allow them to work at a suitable level of efficiency.

The use of the said wind turbines in rural environments is determined by the size and power, noise level and visual impact, although it is clear that a wind turbine system which supplies power which is of interest economically and which may be fitted to new or old buildings, supplying important economic, social and environmental benefits.

### DESCRIPTION OF THE INVENTION

The wind turbine proposed by this invention has the purpose of filling this technical lack of wind power in urban settings, so that, designed as modular for mass-production, it may be installed on roofs and flat roofs, as was stated above, in the form of a prefabricated and independent unit, ready for connection to a power line.

More specifically this wind power generator consists of a turbine with a vertical shaft, encapsulated within a housing that acts as the structural support, piping the airflow and increasing the pressure of the same. The said housing also minimises the visual impact of the generator, as it is seen to be a static element on buildings, while also minimising its acoustic impact by functioning as a screen and acoustic insulation.

As in this turbine the flow of air is piped and increased, better performance than is the case with a conventional turbine is attained, so that the same power may be obtained with a far smaller turbine diameter.

The turbine permits air to enter from all directions, i.e., it is functionally operational independently of the direction of the wind, converting the horizontal inlet flow into a vertical outlet where the corresponding rotor is located, where it is crossed by the airflow and moved, with the resulting motion of the turbine itself.

As may be deduced from the above considerations, as the generator does not need to turn to duly face the wind, the surface needed for its installation is the whole surface occupied by the device itself, unlike conventional turbines with a horizontal shaft that need a large area for turning.

### DESCRIPTION OF THE DRAWINGS

To complement this description and with the aim of helping to attain a better understanding of the characteristics of the invention, according to a preferential example of a practical embodiment of the same, the said description is accompanied in the form of an integral part of the same by a set of drawings in which, as an illustration and without limitation, the following is shown:
Figure 1.- This shows, in the form of a diagrammatic vertical view, a wind turbine made according to the object of this invention.
Figure 2.- This shows a plan view of the device shown in figure 1.
Figure 3.- This shows another vertical view of the turbine in axial cross-section along the cut line A-B in figure 1.
Figure 4.- Finally, this shows a cross-section of the turbine, this time along cut line C-D of figure 3.

### PREFERRED EMBODIMENT OF THE INVENTION

In the said figures it may be observed that the wind turbine proposed by the invention is composed of a base platform (1), in the form of a horizontal frame, which has the purpose of resting on the surface of a building where it is installed, such as the surface of a balcony, to which it is to be properly affixed, so that this base frame or platform is the support or foundation for the other components of the turbine.

More specifically, the said platform (1) is joined at the top to a housing (2), which due to its position is denominated hereinunder the inner housing, which takes the form of a turning body with a curved cross-section, specifically with an increasingly conic shape and a cone that is markedly concavely curved, this interior housing having the purpose of deflecting the air which blows against the turbine horizontally, to convert it into a vertical flow that strikes the rotor (3), which is described below.

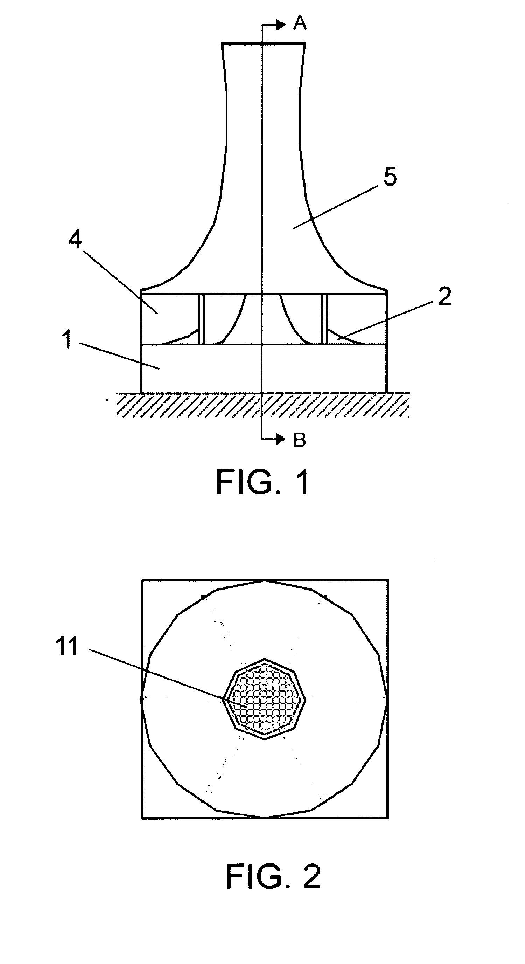

The interior housing (2) contains at the bottom a multiplicity of deflectors (4) in the form of radial walls that channel the air upward, preventing it from moving horizontally within the device. These radial walls or deflectors (4) also have the purpose of acts as separators between the said interior housing (2) and an exterior housing (5), which is relatively similar to the interior housing in shape (2), of which it covers the majority at a certain distance, this being determined by the deflectors-spacers (4), the housing which encloses the air flow that strikes the rotor (3), contributing to direct it and increase its pressure. Likewise and as may be seen especially in observation of figure 1, this forms a visual and static housing for the turbine, and it also functions as an acoustic screen which considerably reduces the transmission of noise into the atmosphere.

As was pointed out above, the rotor (3) is located in the top of the whole set, within the exterior housing (5) and is affixed onto it using horizontal radial supports (6).

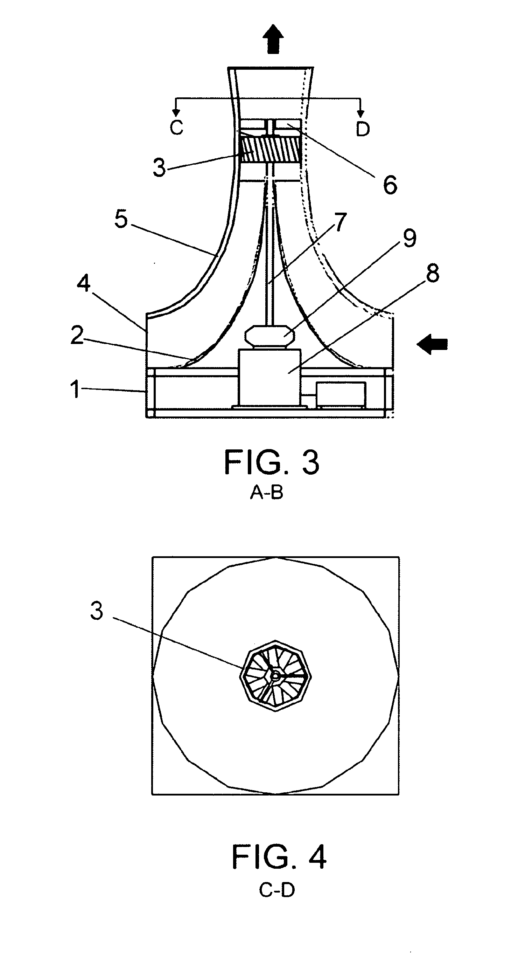

The rotor (3) has its shaft (7) in a vertical descending position, in such a way that its lower end is within the interior housing (2), as may be observed especially in the cross-section of figure 3, acting on the turbine itself (8) through a clutch mechanism (9).

As is obvious, the electric turbine (8) converts the kinetic energy of the shaft (7) of the rotor (3) into electric power, while the clutch between the turbine and the rotor makes it possible to uncouple them when the speed of the latter is excessive.

It only remains to say lastly that the upper free end of the exterior housing (5), which is open to allow the egress of the air, is fitted with a protection grille (11) to prevent the entry of foreign bodies into the rotor (3).

## Claims

1. ^{st}.- A wind turbine, which being fundamentally designed for urban use, on roofs, flat roofs or other suitable parts of buildings, is **characterised by** the fact that it consists of a static turbine with a vertical shaft, supported by an interior housing (2) and an exterior housing (5) between which there is a formed a chamber for the entry of air assisted by deflectors (4) which convert the horizontal direction of the entering air into a vertical and rising direction, while in the exit of the said static turbine there is a rotor (3) the shaft of which (7) transmits the movement to an electric turbine (8) which transforms the kinetic energy of the shaft (7) into electric power for supply to the power transmission network.

2. ^{nd}.- A wind turbine, according to claim 1, **characterised by** the fact that the interior housing (2), which has the shape of a gradually more conic curved cone, is joined to a base platform that supports the other components of the turbine and which is suitably joined to the supporting surface of the same, while the said platform is the support for the electric turbine.

3. ^{rd}.- A wind turbine, according the previous claims, **characterised by** the fact that the electric turbine (8) or the generator in itself, is driven through a clutch or brake (9) that allows it to be decoupled or stopped when the rotor speed is excessive.

4. ^{th}.- A wind turbine, according the previous claims, **characterised by** the fact that the air outlet at the top of the exterior housing (5), includes a protective grille (11).
